# EUROPEAN PATENT APPLICATION

(11) **EP 4 403 243 A1**
(43) Date of publication of application: **24.07.2024**
(21) Application number: 22869919.5
(22) Date of filing: 09.09.2022
(51) Int. Cl.: B01D 53/06, B01D 53/26, F24F 6/08, F24F 3/14, B01J 20/26, B01J 20/34

(54) **ADSORPTION ELEMENT, HUMIDITY CONTROL DEVICE, AND ATMOSPHERIC WATER GENERATOR**

(30) Priority: 17.09.2021 JP 2021152424
(71) Applicant: DAIKIN INDUSTRIES, LTD., Osaka-shi, Osaka 530-0001 (JP); Atomis Inc., Kyoto-shi, Kyoto 602-0841 (JP)
(72) Inventor: KIZAWA, Toshihiro, Osaka-shi, Osaka 530-0001 (JP); OKUZAWA, Kento, Osaka-shi, Osaka 530-0001 (JP); ASARI, Daisuke, Kyoto-shi, Kyoto 602-0841 (JP); WASANO, Tatsuya, Kyoto-shi, Kyoto 602-0841 (JP)
(74) Representative: Hoffmann Eitle
(86) International application number: PCT/JP2022/033973
(87) International publication number: WO 2023/042772

(57) **Abstract**

Provided are an adsorption element, a humidity control apparatus, and an atmospheric water generator capable of suppressing desorption of a metal organic framework. An adsorption element (30) including a base material layer (31) in which a fiber structure in which fibers are integrated and a metal organic framework including a metal ion and an organic ligand are mixed, wherein the metal organic framework is sandwiched between the fibers and held by the fiber structure.

## Description

### TECHNICAL FIELD

The present disclosure relates to an adsorption element, a humidity control apparatus, and an atmospheric water generator.

### BACKGROUND ART

Conventionally, in order to selectively adsorb a specific substance, a metal-organic framework (MOF) as an adsorbent has been used.

For example, as a filter medium described in Patent Document 1 (Japanese Patent Application Laid-Open No. 11-319461), there has been proposed a filter medium in which activated carbon formed into a honeycomb shape or a sheet shape is prepared, and an organometallic complex that selectively adsorbs nitrogen oxide is impregnated to a pore surface of the formed activated carbon.

### SUMMARY OF THE INVENTION

### <Technical Problem>

In the filter medium described in Patent Document 1, the metal organic framework is merely attached to the surface of a support such as activated carbon. For this reason, when an adsorption element including the metal organic framework is used, the metal organic framework attached to the surface of the support such as activated carbon may be detached from the support.

### <Solution to Problem>

An adsorption element according to a first aspect includes a base material layer. The base material layer is a mixture of a fiber structure in which fibers are integrated and a metal organic framework. The metal organic framework includes a metal ion and an organic ligand. The metal organic framework is sandwiched between fibers and held by the fiber structure.

The base material layer may be, for example, a mixed layer obtained by paper-making a liquid in which fibers and a metal organic framework are mixed and dispersed, or an integrated layer in which fibers and the metal organic framework are integrated in a mixed state, such as a mixed sheet.

As the base material layer, for example, it is preferable that the number of metal organic frameworks sandwiched between fibers and held by a fiber structure is larger than the number of metal organic frameworks attached to a fiber surface without being sandwiched between fibers, and it is preferable that a total weight of the metal organic framework sandwiched between fibers and held by the fiber structure in a dry state is larger than a total weight of the metal organic framework attached to the fiber surface without being sandwiched between fibers in the dry state.

In this adsorption element, in the base material layer, the metal organic framework is sandwiched between fibers and held by the fiber structure. Thus, as compared with the case where the metal organic framework is attached to the surfaces of fibers constituting the fiber structure, it is possible to prevent the metal organic framework from falling off from the adsorption element.

In an adsorption element according to a second aspect, fibers have an average fiber length of 100 µm or more in the adsorption element according to the first aspect.

The average fiber length of the fiber is more preferably 300 µm or more.

In this adsorption element, the metal organic framework is easily entangled with the fiber, and the effect of suppressing falling of the metal organic framework from the base material layer is excellent.

In an adsorption element according to a third aspect, the base material layer contains a binder in the adsorption element according to the first or second aspect.

This adsorption element is excellent in the effect of suppressing falling of the metal organic framework from the base material layer.

In an adsorption element according to a fourth aspect, the binder is larger than an opening diameter of the metal organic framework in the adsorption element according to the third aspect.

In this adsorption element, even when a binder is used, a decrease in adsorption capability of the metal organic framework can be suppressed.

In an adsorption element according to a fifth aspect, the binder forms a hydrogen bond or an ionic bond with the fiber in the adsorption element according to the third or fourth aspect.

In this adsorption element, the bonding between the fibers can be strengthened.

An adsorption element according to a sixth aspect further includes an air-permeable layer in the adsorption element according to any one of the first to fifth aspects. The air-permeable layer is stacked on the base material layer. The air-permeable layer has a smaller content of the metal organic framework per unit area as viewed in a stacking direction than that of the base material layer, or does not have the metal organic framework.

For example, in the air-permeable layer, the content of the metal organic framework per unit area as viewed in the stacking direction may be half or less of that of the base material layer, or 1/5 or less of that of the base material layer, or the air-permeable layer may not have the metal organic framework.

The adsorption element further includes an air-permeable layer stacked on the base material layer. Thus, even if the metal organic framework falls off from the base material layer, the air-permeable layer can catch the fallen metal organic framework, so that falling off of the metal organic framework from the adsorption element can be sufficiently suppressed.

Since the air-permeable layer stacked on the base material layer has air-permeability, an object such as moisture adsorbed by an organometallic framework of the base material layer easily passes through the air-permeable layer.

In an adsorption element according to a seventh aspect, the air-permeable layer includes a first air-permeable layer and a second air-permeable layer in the adsorption element according to the sixth aspect. The base material layer is located between the first air-permeable layer and the second air-permeable layer.

In this adsorption element, the base material layer is sandwiched between the first air -permeable layer and the second air-permeable layer, so that falling off of the metal organic framework from the adsorption element can be more sufficiently suppressed.

In an adsorption element according to an eighth aspect, a thickness of the base material layer is larger than a thickness of the air-permeable layer in the adsorption element according to the sixth or seventh aspect.

In the adsorption element according to the seventh aspect, as the adsorption element in which the thickness of the base material layer is larger than the thickness of the air-permeable layer, the thickness of the base material layer may be larger than the thickness of the first air-permeable layer, and the thickness of the base material layer may be larger than the thickness of the second air-permeable layer.

In this adsorption element, since the thickness of the base material layer is larger than the thickness of the air-permeable layer, a sufficient amount of the organometallic framework can be held in the base material layer. When an object to be adsorbed by the adsorption element passes through the air-permeable layer and is adsorbed by the organometallic framework, a path through which the object passes can be shortened.

In the adsorption element according to a ninth aspect, the content of the metal organic framework per unit area as viewed in a thickness direction of the base material layer is 70% by weight or more in the adsorption element according to any one of the first to eighth aspects.

In this adsorption element, since the content of the metal organic framework is large, an adsorption amount of an adsorption target can be sufficiently secured.

In the adsorption element according to a tenth aspect, the base material layer is formed in a corrugated shape in the adsorption element according to any one of the first to ninth aspects.

In this adsorption element, since an accommodation amount of the base material layer per unit volume can be increased, the adsorption amount of the adsorption target can be sufficiently secured.

A humidity control apparatus according to an eleventh aspect includes: the adsorption element according to any one of the first to tenth aspects; and a regenerator. The regenerator desorbs moisture adsorbed on the adsorption element from the adsorption element.

In this humidity control apparatus, since the regenerator regenerates the adsorption element, the adsorption element can be repeatedly used.

A humidity control apparatus according to a twelfth aspect includes a humidifier in the humidity control apparatus according to the eleventh aspect. The humidifier humidifies a target space using the moisture desorbed from the adsorption element.

This humidity control apparatus can dehumidify the target space and humidify the target space.

An atmospheric water generator according to a thirteenth aspect includes the adsorption element according to any one of the first to tenth aspects, a regenerator, and a condenser. The regenerator desorbs moisture adsorbed on the adsorption element from the adsorption element. The condenser condenses the moisture desorbed from the adsorption element to generate condensed water.

In this atmospheric water generator, it is possible to prevent the metal organic framework from entering the obtained condensed water.

### BRIEF DESCRIPTION OF THE DRAWINGS

FIG. 1 is a cross-sectional schematic configuration diagram (part 1) of an adsorption element.
FIG. 2 is a cross-sectional schematic configuration diagram (part 2) of the adsorption element.
FIG. 3 is a cross-sectional schematic configuration diagram (part 3) of the adsorption element.
FIG. 4 is an external perspective view of a rotor.
FIG. 5 is a partially enlarged view of the rotor.
FIG. 6 is a schematic external view of an air conditioner.
FIG. 7 is a schematic configuration diagram of the air conditioner.
FIG. 8 is an exploded perspective view of a humidifying unit.
FIG. 9 is an explanatory view of a region in top view of a humidifying rotor.
FIG. 10 is a schematic external view of an atmospheric water generator.

### DESCRIPTION OF EMBODIMENTS

### (1) Adsorption element

An adsorption element includes a base material layer in which a fiber structure and a metal organic framework are mixed.

The adsorption element may include only one base material layer, or may include two base material layers by providing the base material layers on both surfaces of a support layer that is a fiber structure such as pulp paper.

### (1-1) Base material layer

The base material layer is a composite of a fiber and a metal organic framework in which a fiber structure in which fibers are integrated and a metal organic framework including a metal ion and an organic ligand are mixed.

### (1-1-1) Fiber

Examples of the fiber constituting the fiber structure include pulp fibers, resin fibers, glass fibers, and carbon fibers, and one or two or more of these fibers may be used in combination.

The fiber of the fiber structure is preferably a heat-resistant fiber having excellent heat resistance when a regeneration treatment is performed in which moisture adsorbed on the adsorption element is desorbed by heating the adsorption element or supplying heated air to the adsorption element. The heat-resistant fiber preferably has a shape that does not change in an atmosphere at 150°C, more preferably has a shape that does not change in an atmosphere at 250°C, and still more preferably has a shape that does not change in an atmosphere at 300°C. When the fiber has a glass transition temperature, the glass transition temperature is preferably 150°C or higher, more preferably 250°C or higher, and still more preferably 300°C or higher. Examples of such heat-resistant fibers include resin fibers, glass fibers, and carbon fibers. Examples of the resin fibers include aromatic polyamide resin fibers, polybenzazole-based resin fibers, and cellulose fibers. The aromatic polyamide resin fiber is preferably an aramid fiber. As the polybenzazole-based resin fibers, polyparaphenylene benzobisoxazole fibers (PBO: Poly-p-phenylenebenzobisoxazole fibers) are preferable.

The average fiber diameter of the fiber may be, for example, 0.1 µm or more and 100 µm or less, and is preferably 1 µm or more and 10 µm or less. The average fiber diameter may be calculated as a number average fiber diameter by randomly selecting 50 fibers from an image of a scanning electron micrograph.

The average fiber length of the fiber is, for example, preferably 100 µm or more, more preferably 300 µm or more. The average fiber length of the fiber is not particularly limited, and may be, for example, 600 µm or less. The average fiber length of fiber can be calculated as an average value obtained by randomly measuring 100 fiber lengths using a tabletop scanning electron microscope (manufactured by JEOL Ltd., JCM-7000 NeoScope). When fibers having an average fiber length of 100 µm or more are used, the metal organic framework is easily entangled with the fibers. Since the fibers are also easily entangled with each other, falling of the fibers from the base material layer is suppressed, and in addition, falling of the organometallic framework sandwiched and held between the plurality of fibers from the base material layer is also suppressed.

### (1-1-2) Metal organic framework

The metal organic framework is sandwiched between fibers and held by the fiber structure in the base material layer. Since the metal organic framework is sandwiched between fibers and held by the fiber structure, falling off from the base material layer is suppressed. Since the metal organic framework is sandwiched between fibers, held by the fiber structure, and held not only on the surface of the fiber structure but also inside the fiber structure, the metal organic framework held inside the fiber structure are prevented from falling off from the adsorption element. Furthermore, since the metal organic framework is sandwiched between the fibers, held by the fiber structure, and held not only on the surface of the fiber structure but also inside the fiber structure, it is possible to increase a support amount in the base material layer. As the base material layer, it is preferable that the number of metal organic frameworks sandwiched between fibers and held by the fiber structure is larger than the number of metal organic frameworks attached to the fiber surface without being sandwiched between fibers, and it is preferable that a total weight of the metal organic framework sandwiched between fibers and held by the fiber structure in a dry state is larger than a total weight of the metal organic framework attached to the fiber surface without being sandwiched between fibers in the dry state.

The method of sandwiching the metal organic framework between fibers is not particularly limited, and examples thereof include a method in which both the fiber and the metal organic structure are dispersed in water, an organic solvent, or the like, and the dispersion is paper-made to obtain a sheet-shaped product.

The metal-organic framework (MOF) is a porous material obtained by reaction of a metal ion with an organic ligand and having a significantly large specific surface area. Hereinafter, the metal organic framework may be referred to as a porous metal complex (PCP: Porous Coordination Polymer). In the metal organic framework, the organic ligand connects the metal ion, whereby a polymer structure having an infinite number of openings inside is obtained. An opening diameter and a topology of the metal organic framework can be adjusted by selecting and combining a metal ion and an organic ligand. The opening diameter of the metal organic framework can be adjusted by selecting and combining a metal ion and an organic ligand, and the metal organic framework can selectively adsorb a target.

The metal ion for forming the metal organic framework may be selected according to a target structural design, and for example, one or two or more selected from the group consisting of Mg²⁺, Ca²⁺, Ti⁴⁺, Zr⁴⁺, Hf⁴⁺, V⁴⁺, Co²⁺, Ni²⁺, Cu²⁺, Zn²⁺, Al³⁺, Mn²⁺, Fe²⁺, Fe³⁺, Cr³⁺, and Cr⁶⁺ are used.

The organic ligand for forming the metal organic framework may be selected according to a target structural design, and examples thereof include a carboxylic acid anion, an amine compound, a sulfonic acid anion, a phosphoric acid anion, and a heterocyclic compound. Examples of the carboxylic acid anion include anionic dicarboxylic acid, tricarboxylic acid, and tetracarboxylic acid, and more specific examples of the carboxylic acid anion include terephthalic acid, isophthalic acid, fumaric acid, trimesic acid, citric acid, malic acid, trimellitic acid, pyromellitic acid, oxalic acid, and derivatives thereof. Examples of the heterocyclic compound include bipyridine, imidazole, adenine, pyrazole, triazole, tetrazole, and derivatives thereof. As the organic ligand, one or two or more thereof can be used.

Some metal organic frameworks are excellent in moisture adsorption characteristics, and it is preferable to use the metal organic framework as a moisture absorbing material.

The metal organic framework is excellent in amount of adsorbed water per unit volume as compared with zeolites such as zeolite 13x, and among them, MOF -801 and MOF -303 are preferable in that the amount of adsorbed water is particularly excellent.

The metal organic framework is more excellent in water adsorption rate than zeolites such as zeolite 13x, and among them, MII,-100 (Fe) and MOF-801 are particularly preferable in that the water adsorption rate is particularly excellent.

The metal organic framework is more excellent in durability than zeolites such as zeolite 13x in that a decrease in adsorption amount is suppressed when the metal organic framework is used while moisture is repeatedly adsorbed and desorbed.

The metal organic framework is superior to zeolites such as zeolite 13x in that specific heat is equal to or smaller than that of zeolites, and energy required when the metal organic framework is used in the case of heating and regenerating to desorb adsorbed moisture can be suppressed to a small level, and among them, MIL-101 (Cr), MOF-801, and MOF-74 (Mg) are preferable in that the specific heat is particularly small.

The metal organic framework is excellent in that an adsorption energy of water is equal to or smaller than that of zeolite such as zeolite 13x, and an energy required for desorbing the adsorbed moisture can be suppressed to be small, and among them, MOF-801 and MII,-100 (Fe) are preferable in that the adsorption energy of water is particularly small.

When the metal organic framework is used by heating and regenerating to desorb adsorbed moisture, MOF-303 is preferable from the viewpoint of excellent heat resistance. When the metal organic framework is used by being heated and regenerated, an ambient temperature of the metal organic framework is preferably 70°C or higher, and more preferably 100°C or higher from the viewpoint of excellent regeneration efficiency. When the metal organic framework is used by being heated and regenerated, the ambient temperature of the metal organic framework may be 300°C or lower, and is preferably 250°C or lower, and more preferably 130°C or lower from the viewpoint of suppressing deterioration of the metal organic framework to be small.

MOF-801 described above can be expressed as [Zr₆(O)₄(OH)₄(fumarate)₆]ₙ. -MOF-303 can be expressed as [Al(OH)(3,5-pyrazoledicarboxylate)(H₂O)]ₙ. MII,-100(Fe) can be expressed as Fe₃O(H₂O)₂OH(C₆H₃(COO)₃)₂. MII,-101(Cr) can be expressed as Cr₃O(OH)(H₂O)₂(C₆H₄(COO)₂)₃.

The form of the metal organic framework is not particularly limited, and for example, powdery, pellet-like, or film-like metal organic framework can be used. An average particle size of the metal organic framework may be, for example, 0.01 µm or more and 100 µm or less, and is preferably 0.1 µm or more and 10 µm or less. The average particle size is measured as, for example, D50 that is a particle size corresponding to accumulation 50% from a smaller side of a cumulative particle size by a laser diffraction scattering particle size distribution measurement method.

The content of the metal organic framework per unit area as viewed in a thickness direction of the base material layer is preferably 70% by weight or more, more preferably 75% by weight or more of the base material layer in a dry state from the viewpoint of sufficiently securing an adsorption amount of an adsorption target.

### (1-1-3) Optional components of substrate layer

In the base material layer, a binder may be used in order to increase bonding strength between fibers or to increase the bonding strength between fibers and the metal organic framework. Such a binder can be used, for example, in such a manner that fibers and the metal organic framework are both dissolved in a dispersion liquid in which the fibers and the metal organic framework are dispersed in water, an organic solvent, or the like, and the mixture is paper-made to obtain a sheet-shaped product.

As the binder, an organic binder and an inorganic binder can be used; however, in the case of using the inorganic binder, the metal organic framework may be deteriorated by heating during curing, and therefore, the organic binder is preferably used. Examples of the organic binder include polyacrylamide, ammonium carboxymethyl cellulose, carboxymethyl cellulose, cellulose nanofibers, polyethyleneimine, polyamide epichlorohydrin, urea formaldehyde resin, melamine formaldehyde resin, polyvinyl amine, and polyvinyl alcohol. Since the metal organic framework is sandwiched between fibers and held by the fiber structure, even when the organic binder is used, an amount of the organic binder used can be reduced. This also prevents the infinite number of openings of the metal organic framework from being covered with the organic binder.

As the binder, it is preferable to use a binder larger than the opening diameter of the metal organic framework from the viewpoint of suppressing a decrease in adsorption capability of the metal organic framework. Specifically, an average shortest dimension of the binder is preferably larger than an average opening diameter of the metal organic framework. The average shortest dimension of the binder can be calculated, for example, using a bond length and a van der Waals radius grasped from a structural formula of the binder. The average opening diameter of the metal organic framework can be grasped by performing single crystal structure analysis or Rietveld analysis of a diffraction pattern grasped by an X-ray diffractometer.

As the binder used to increase the bonding strength between fibers, for example, a binder that forms a hydrogen bond with fibers, an ionic polymer such as an anionic polymer, a cationic polymer, or an amphoteric polymer, or the like is preferable from the viewpoint of acting on aggregation of fibers. Examples of those that form a hydrogen bond with a fiber include polyacrylamide, a urea resin, a melamine resin, modified starch, polyvinyl alcohol, hydroxypropyl cellulose, cellulose nanofibers, polyvinyl pyrrolidone, polyethylene glycol, polyethylene oxide, and polyvinyl amide. Examples of the anionic polymer include carboxymethyl cellulose, polyacrylic acid, and anionic polyvinyl alcohol. Examples of the cationic polymer include polyethyleneimine, cationic polyvinyl alcohol, cationized starch, polydiallyldimethylammonium chloride, polyamidopolyamine epichlorohydrin, polyvinylamine, polyallylamine, and chitosan. In particular, when cellulose fibers are used as fibers, it is preferable to use those forming a hydrogen bond or an ionic polymer as a binder.

### (1-2) Air-permeable layer

It is preferable that the air-permeable layer is stacked on the base material layer from the viewpoint of suppressing falling of the metal organic framework held by the fiber structure. The air-permeable layer is configured not to completely cover one surface of the base material layer so that air containing an object to be adsorbed can pass through the air-permeable layer and reach the base material layer.

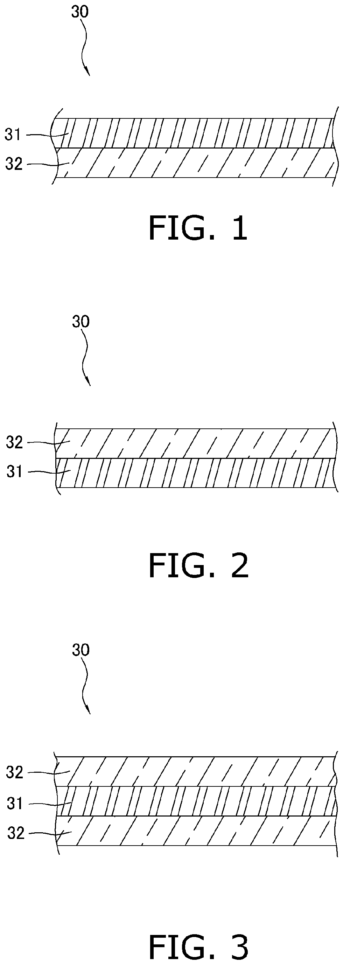

The air-permeable layer may be provided only on one surface side or on both surfaces in the thickness direction of the base material layer. Specifically, as shown in a cross-sectional views of an adsorption element 30 in FIGS. 1 and 2, an air-permeable layer 32 may be provided only on one surface side of a base material layer 31, or as shown in the cross-sectional view of the adsorption element 30 in FIG. 3, a first air-permeable layer 32 may be provided on one surface of the base material layer 31, and a second air-permeable layer 33 may be provided on the other surface. When the air-permeable layers are provided on both surfaces of the base material layer, the materials and thicknesses of the air-permeable layers may be the same or different.

The air-permeable layer preferably does not have the metal organic framework, and even if the air-permeable layer has the metal organic framework, the content of the metal organic framework per unit area as viewed in a stacking direction is preferably smaller than that of the base material layer, and more preferably 1/5 or less of the base material layer.

The thickness of the air-permeable layer is preferably thinner than the thickness of the base material layer. When the air-permeable layers are provided on both surfaces of the base material layer, the thickness of each air-permeable layer is preferably smaller than the thickness of the base material layer. As a result, a fluid such as air containing an object to be adsorbed easily reaches the metal organic framework of the base material layer, so that the adsorption amount of the metal organic framework can be increased.

Such an air-permeable layer is not particularly limited, and may be configured by containing, for example, cellulose acetate, ethyl cellulose, cellulose nanofibers, an acrylic polymer, and the like, or may be configured by a fiber structure including fibers similar to the fibers of the base material layer such as pulp fibers and cellulose fibers.

The air-permeable layer can be provided by spray-coating the base material layer by spray coating or the like, dip coating by impregnating the base material layer with a solution of a component constituting the air-permeable layer, or the like. When the air-permeable layer is provided by spray coating or dip coating of a polymer on the base material layer, it is preferable to use one in which the average shortest dimension of the polymer is larger than the average opening diameter of the metal organic framework from the viewpoint of suppressing a decrease in adsorption capability of the metal organic framework.

### (1-3) Form

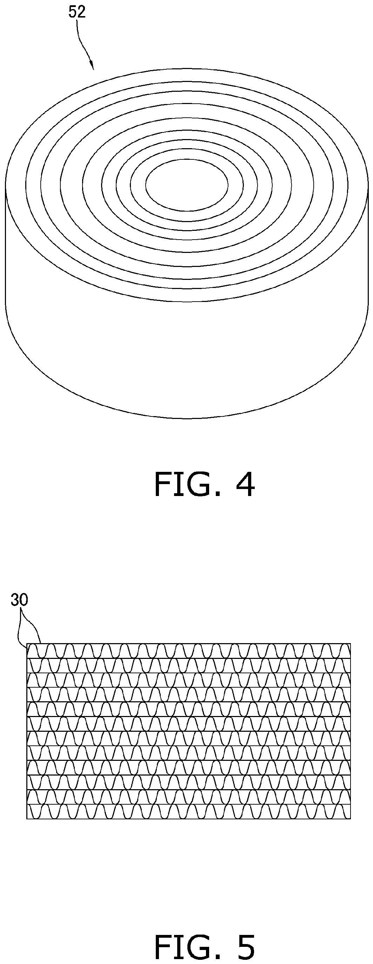

The form of the adsorption element including the base material layer is not particularly limited, and may be, for example, a sheet shape, or a roll-shaped rotor 52 in which a sheet-like adsorption element is wound up as illustrated in FIG. 4.

From the viewpoint of increasing a contact area with the object to be adsorbed, the adsorption element is preferably configured in a corrugated shape like the adsorption element 30 illustrated in FIG. 5. In addition, it is preferable to wind up the adsorption element configured in a corrugated shape to form the roll-shaped rotor 52.

### EXAMPLES

Hereinafter, examples of the adsorption element will be described with specific examples.

### (Example 1)

49% by weight of pulp fibers (manufactured by ArTec Co., LTD.), 1% by weight of polyacrylamide (manufactured by ACROS ORGANICS, MW 100,000), and 50% by weight of MIL-100 (Fe) (AP0004 manufactured by Atomis) were dispersed in water, and the aqueous dispersion was made into a sheet by a handsheet method, and the sheet was heated and dried at 90°C while a pressure was applied from above, and further heated and vacuum-dried at 150°C to obtain a PCP-containing mixed sheet having a thickness of 160 g/m².

### (Example 2)

A PCP-containing mixed paper having a thickness of 155 g/m² was obtained using the same method as in Example 1 except that MOF-801 (AP0005 manufactured by Atomis) was used as the PCP.

### (Example 3)

A PCP-containing mixed paper having a thickness of 150 g/m² was obtained using the same method as in Example 1 except that MOF-303 (AP0044 manufactured by Atomis) was used as the PCP.

### (Example 4)

34% by weight of pulp fibers (manufactured by ArTec Co., LTD.), 1% by weight of polyacrylamide (manufactured by ACROS ORGANICS, MW 100,000), and 65% by weight of MIL-100 (Fe) (AP0004 manufactured by Atomis) were dispersed in water, and the aqueous dispersion was made into a sheet by a handsheet method, and the sheet was heated and dried at 90°C while a pressure was applied from above, and further heated and vacuum-dried at 150°C to obtain a PCP-containing mixed sheet having a thickness of 165 g/m².

### (Example 5)

A PCP-containing mixed paper having a thickness of 160 g/m² was obtained using the same method as in Example 4 except that MOF-801 (AP0005 manufactured by Atomis) was used as the PCP.

### (Example 6)

A PCP-containing mixed paper having a thickness of 160 g/m² was obtained using the same method as in Example 4 except that MOF-303 (AP0044 manufactured by Atomis) was used as the PCP.

### (Example 7)

24% by weight of pulp fibers (manufactured by ArTec Co., LTD.), 1% by weight of polyacrylamide (manufactured by ACROS ORGANICS, MW 100,000), and 75% by weight of MIL-100 (Fe) (AP0004 manufactured by Atomis) were dispersed in water, and the aqueous dispersion was made into a sheet by a handsheet method, and the sheet was heated and dried at 90°C while a pressure was applied from above, and further heated and vacuum-dried at 150°C to obtain a PCP-containing mixed sheet having a thickness of 165 g/m².

### (Example 8)

A PCP-containing mixed paper having a thickness of 170 g/m² was obtained using the same method as in Example 7 except that MOF-801 (AP0005 manufactured by Atomis) was used as the PCP.

### (Example 9)

A PCP-containing mixed paper having a thickness of 165 g/m² was obtained using the same method as in Example 7 except that MOF-303 (AP0044 manufactured by Atomis) was used as the PCP.

### (Example 10)

49% by weight of cellulose fibers (CELISH KY100G manufactured by Daicel FineChem Ltd.), 1% by weight of polyacrylamide (manufactured by ACROS ORGANICS, MW 100,000), 50% by weight of MOF-801 (AP0005 manufactured by Atomis) were dispersed in water, and the aqueous dispersion was made into a sheet by a handsheet method, and the sheet was heated and dried at 120°C while a pressure was applied from above to obtain a PCP-containing mixed sheet having a thickness of 155 g/m².

### (Example 11)

49% by weight of aramid fibers (TIALA KY-400S manufactured by Daicel FineChem Ltd.), 1% by weight of polyacrylamide (manufactured by ACROS ORGANICS, MW 100,000), and 50% by weight of MOF-801 (AP0005 manufactured by Atomis) were dispersed in water, the aqueous dispersion was made into a sheet by a handsheet method, and the sheet was heated and dried at 90°C while a pressure was applied from above, and further heated and vacuum-dried at 150°C to obtain a PCP-containing mixed sheet having a thickness of 160 g/m².

### (Example 12)

A PCP-containing mixed paper having a thickness of 145 g/m² was obtained using the same method as in Example 1 except that ammonium CMC (CMC Daicel DN800H manufactured by Daicel FineChem Ltd.) was used as a binder.

### (Example 13)

A PCP-containing mixed paper having a thickness of 155 g/m² was obtained using the same method as in Example 1 except that cellulose nanofibers (RHEOCRISTA I-2 AX manufactured by DKS Co., Ltd.) were used as a binder.

### (Example 14)

A PCP-containing mixed paper having a thickness of 160 g/m² was obtained using the same method as in Example 1 except that polyethyleneimine (Polyethyleneimine 70000 manufactured by JUNSEIKAGAKU) was used as a binder.

### (Example 15)

APCP-containing mixed paper having a thickness of 155 g/m² was obtained using the same method as in Example 1 except that polyamide epichlorohydrin (manufactured by SEIKO PMC CORPORATION, WS4020) was used as a binder.

### (Example 16)

50% by weight of pulp fibers (manufactured by ArTec Co., LTD.) and 50% by weight of MIL-100 (Fe) (AP0004 manufactured by Atomis) were dispersed in water, the aqueous dispersion was made into a sheet by a handsheet method, and the sheet was heated and dried at 90°C while a pressure was applied from above, and further heated and vacuum-dried at 150°C to obtain a PCP-containing mixed sheet having a thickness of 160 g/m².

### (Comparative Example 1)

MIL-100 (Fe) (Atomis synthetic product, AP0004) was ultrasonically dispersed in distilled water, and polyacrylamide (manufactured by ACROS ORGANICS, MW 100,000) was added thereto to prepare a 30% by weight MIL-100 (Fe) and 0.6% by weight polyacrylamide dispersion. Pulp paper (square qualitative filter paper 5B manufactured by Advantec) was stirred and immersed therein for 30 minutes, taken out, and then vacuum-dried at 150°C. This operation was repeated to adjust the PCP addition amount to 50% by weight.

### (Comparative Example 2)

Polyacrylamide (manufactured by ACROS ORGANICS, MW 100,000) was stirred and dissolved in distilled water, and MIL-100 (Fe) (Atomis synthetic product, AP0004) was added thereto and ultrasonically dispersed to prepare a 20% by weight MIL-100 (Fe) and 0.4% by weight polyacrylamide dispersion. This dispersion was spray-coated on pulp paper (square qualitative filter paper 5B manufactured by Advantec) and vacuum-dried at 150°C. This operation was repeated to adjust the PCP addition amount to 50% by weight.

### (Evaluation of powder support property)

Each adsorption element was placed in a stainless steel container, and an amount of powder loss of the PCP dropped by tapping up, down, left, and right 10 times was evaluated by weight measurement. The support property was evaluated in the following stages as powder loss amount/support amount (% by weight).
Evaluation 1: 100 to 50 (% by weight)
Evaluation 2: 50 to 20 (% by weight)
Evaluation 3: 20 to 5 (% by weight)
Evaluation 4: 5 to 2 (% by weight)
Evaluation 5: 2 to 0 (% by weight)

The details of the adsorption elements of Examples 1 to 16 and the powder support property evaluation thereof are shown in Table 1.

**[Table 1]**

| Sample | Base | | Binder | | PCP | | Thickness [g/m²] | PCP support amount [wt%] | Support property |
|---|---|---|---|---|---|---|---|---|---|
| | Type | Addition amount [wt%] | Type | Addition amount [wt%] | Type | Addition amount [wt%] | | | |
| Example 1 | Pulp fiber | 49 | Polyacrylamide | 1 | MIL-100(Fe) | 50 | 160 | 50 | 5 |
| Example 2 | Pulp fiber | 49 | Polyacrylamide | 1 | MOF-801 | 50 | 155 | 50 | 5 |
| Example 3 | Pulp fiber | 49 | Polyacrylamide | 1 | MOF-303 | 50 | 150 | 50 | 5 |
| Example 4 | Pulp fiber | 34 | Polyacrylamide | 1 | MIL-100(Fe) | 65 | 165 | 65 | 4 |
| Example 5 | Pulp fiber | 34 | Polyacrylamide | 1 | MOF-801 | 65 | 160 | 65 | 4 |
| Example 6 | Pulp fiber | 34 | Polyacrylamide | 1 | MOF-303 | 65 | 160 | 65 | 3 |
| Example 7 | Pulp fiber | 24 | Polyacrylamide | 1 | MIL-100(Fe) | 75 | 165 | 75 | 2 |
| Example 8 | Pulp fiber | 24 | Polyacrylamide | 1 | MOF-801 | 75 | 170 | 75 | 2 |
| Example 9 | Pulp fiber | 24 | Polyacrylamide | 1 | MOF-303 | 75 | 165 | 75 | 2 |
| Example 10 | Cellulose fiber | 49 | Polyacrylamide | 1 | MOF-801 | 50 | 155 | 50 | 5 |
| Example 11 | Aramid Fiber | 49 | Polyacrylamide | 1 | MOF-801 | 50 | 160 | 50 | 4 |
| Example 12 | Pulp fiber | 49 | Ammonium CMC | 1 | MIL-100(Fe) | 50 | 145 | 50 | 4 |
| Example 13 | Pulp fiber | 49.8 | Cellulose nanofiber | 0.2 | MIL-100(Fe) | 50 | 155 | 50 | 5 |
| Example 14 | Pulp fiber | 49 | Polyethyleneimine | 1 | MIL-100(Fe) | 50 | 160 | 50 | 4 |
| Example 15 | Pulp fiber | 49 | Polyamide epichlorohydrin | 1 | MIL-100(Fe) | 50 | 155 | 50 | 5 |
| Example 16 | Pulp fiber | 50 | - | - | MIL-100(Fe) | 50 | 150 | 50 | 2 |
| Comparativ e Example 1 | Pulp paper | 49 | Polyacrylamide | 1 | MIL-100(Fe) | 50 | - | 50 | 1 |
| Comparativ e Example 2 | Pulp paper | 49 | Polyacrylamide | 1 | MIL-100(Fe) | 50 | - | 50 | 1 |

As shown in Table 1 above, in Comparative Examples 1 and 2 prepared under the same conditions as in Example 1, it was confirmed that the support property of the metal organic framework was poor.

### (Example 17)

99% by weight of pulp fibers (manufactured by ArTec Co., LTD.) and 1% by weight of polyacrylamide (manufactured by ACROS ORGANICS, MW 100,000) were dispersed in water, and the aqueous dispersion was made into a sheet by a handsheet method, and the sheet was heated and dried at 120°C while a pressure was applied from above to obtain Layer-A paper having a thickness of 80 g/m². Separately, 34% by weight of pulp fibers (manufactured by Artec Co., Ltd.), 1% by weight of polyacrylamide (manufactured by ACROS ORGANICS, MW 100,000), and 65% by weight of MOF-801 (Atomis synthetic product, AP0005) were dispersed in water, this aqueous dispersion was made into a sheet using a handsheet net on which Layer-A paper was laid in advance, and the sheet was heated and dried at 90°C while a pressure was applied from above, and further heated and vacuum-dried at 150°C to obtain a two-layer mixed sheet having a thickness of 240 g/m².

### (Example 18)

29% by weight of pulp fibers (manufactured by Artec Co., Ltd.), 1% by weight of polyacrylamide (manufactured by ACROS ORGANICS, MW 100,000), and 75% by weight of MOF-801 (Atomis synthetic product, AP0005) were dispersed in water, this aqueous dispersion was made into a sheet using a handsheet net on which Layer-A paper was laid in advance, and the sheet was heated and dried at 90°C while a pressure was applied from above, and further heated and vacuum-dried at 150°C to obtain a two-layer mixed sheet having a thickness of 245 g/m2.

### (Example 19)

79% by weight of pulp fibers (manufactured by ArTec Co., LTD.), 1% by weight of polyacrylamide (manufactured by ACROS ORGANICS, MW 100,000), and 20% by weight of MOF-801 (Atomis synthetic product, AP0005) were dispersed in water, the aqueous dispersion was made into a sheet by a handsheet method, and the sheet was heated and dried at 120°C while a pressure was applied from above to obtain Layer-B paper having a thickness of 85 g/m². Separately, 19% by weight of pulp fibers (manufactured by Artec Co., Ltd.), 1% by weight of polyacrylamide (manufactured by ACROS ORGANICS, MW 100,000), and 80% by weight of MOF-801 (Atomis synthetic product, AP0005) were dispersed in water, this aqueous dispersion was made into a sheet using a handsheet net on which Layer-B paper was laid in advance, and the sheet was heated and dried at 150°C while a pressure was applied from above to obtain a two-layer mixed sheet having a thickness of 245 g/m².

### (Example 20)

54% by weight of pulp fibers (manufactured by ArTec Co., LTD.), 1% by weight of polyacrylamide (manufactured by ACROS ORGANICS, MW 100,000), and 45% by weight of MOF-801 (Atomis synthetic product, AP0005) were dispersed in water, the aqueous dispersion was made into a sheet by a handsheet method, and the sheet was heated and dried at 120°C while a pressure was applied from above to obtain Layer-C paper having a thickness of 85 g/m². Separately, 14% by weight of pulp fibers (manufactured by Artec Co., Ltd.), 1% by weight of polyacrylamide (manufactured by ACROS ORGANICS, MW 100,000), and 85% by weight of MOF-801 (Atomis synthetic product, AP0005) were dispersed in water, this aqueous dispersion was made into a sheet using a handsheet net on which Layer-C paper was laid in advance, and the sheet was heated and dried at 90°C while a pressure was applied from above, and further heated and vacuum-dried at 150°C to obtain a two-layer mixed sheet having a

thickness of 255 g/m².

Table 2 shows each layer paper used in Examples 17 to 20.

**[Table 2]**

| Sample | Base | | Binder | | PCP | | Thickness [g/m²] |
|---|---|---|---|---|---|---|---|
| | Type | Addition amount [wt%] | Type | Addition amount [wt%] | Type | Addition amount [wt%] | |
| Layer-A | Pulp fiber | 99 | Polyacrylamide | 1 | - | - | 80 |
| Layer-B | Pulp fiber | 79 | Polyacrylamide | 1 | MOF-801 | 20 | 85 |
| Layer-C | Pulp fiber | 54 | Polyacrylamide | 1 | MOF-801 | 45 | 85 |

The details of the adsorption elements of Examples 17 to 20 and the powder support property evaluation thereof are shown in Table 3.

**[Table 3]**

| Sample | First layer | Second layer | | | | | | Total thicknes s [g/m²] | PCP suppor t amoun t [wt%] | Powder support propert y |
|---|---|---|---|---|---|---|---|---|---|---|
| | | Base | | Binder | | PCP | | | | |
| | | Type | Addition amount [wt%] | Type | Addition amount [wt%] | Type | Addition amount [wt%] | | | |
| Example 17 | Layer-A | Pulp fiber | 34 | Polyacrylamide | 1 | MOF-801 | 65 | 240 | 43 | 5 |
| Example 18 | Layer-A | Pulp fiber | 29 | Polyacrylamide | 1 | MOF-801 | 75 | 245 | 51 | 5 |
| Example 19 | Layer-B | Pulp fiber | 19 | Polyacrylamide | 1 | MOF-801 | 80 | 245 | 59 | 5 |
| Example 20 | Layer-C | Pulp fiber | 14 | Polyacrylamide | 1 | MOF-801 | 85 | 255 | 72 | 4 |

### (Example 21)

A cellulose nanofiber (RHEOCRISTA I-2 AX manufactured by DKS Co., Ltd.) was stirred and diluted with distilled water to prepare a 0.5% by weight cellulose nanofiber solution. This solution was placed in a spray bottle, spray-coated on the surface of the PCP-containing mixed paper prepared in Example 7, and vacuum-dried at 150°C. This operation was repeated to adjust the coating amount to 2% by weight.

### (Example 22)

Cellulose acetate (manufactured by Wako Pure Chemical Industries, Ltd.) was stirred and dissolved in acetone to prepare a 5% by weight cellulose acetate solution. This dispersion was placed in a spray bottle, spray-coated on the surface of the PCP-containing mixed paper prepared in Example 8, and vacuum-dried at 150°C. This operation was repeated to adjust the coating amount to 5% by weight.

### (Example 23)

Ethyl cellulose (ETHOCEL STD100 manufactured by Nisshin Kasei Co., Ltd.) was stirred and dissolved in methanol to prepare a 5% by weight ethyl cellulose solution. This dispersion was placed in a spray bottle, spray-coated on the surface of the PCP-containing mixed paper prepared in Example 9, and vacuum-dried at 150°C. This operation was repeated to adjust the coating amount to 5% by weight.

The details of the adsorption elements of Examples 21 to 23 and the powder support property evaluation thereof are shown in Table 4.

**[Table 4]**

| Sample | First layer | Coating agent | | Coating solvent | PCP support amount [wt%] | Powder support property |
|---|---|---|---|---|---|---|
| | | Type | Addition amount [wt%] | | | |
| Example 21 | Example 7 | Cellulose nanofiber | 2 | Distilled water | 74 | 5 |
| Example 22 | Example 8 | Acrylic polymer | 5 | Acetone | 71 | 5 |
| Example 23 | Example 9 | Ethyl cellulose | 5 | Methanol | 71 | 5 |

As shown in Table 4, it was confirmed that the powder support property was very good by coating the surface of the PCP-containing mixed paper.

### (2) Humidity control apparatus

Hereinafter, as an embodiment of a humidity control apparatus using the adsorption element, an air conditioner 1 will be described as an example.

### (2-1) Air conditioner

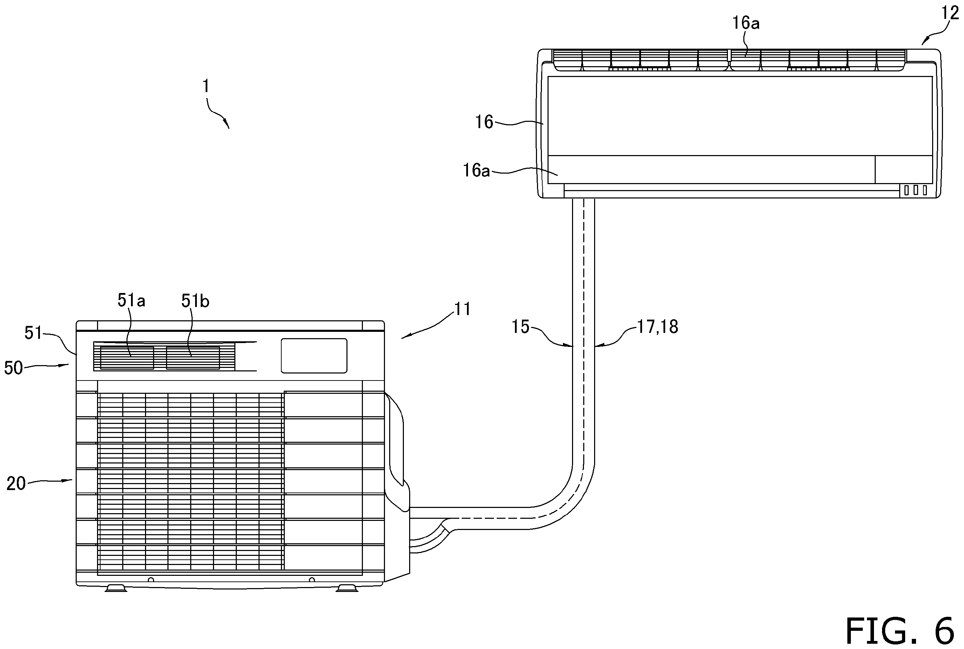

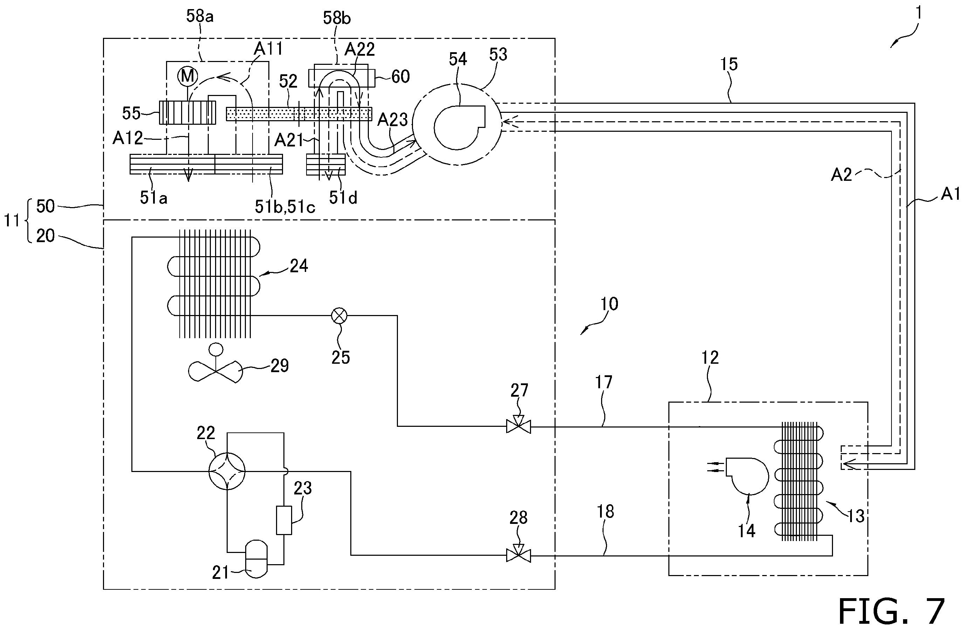

FIG. 6 is a schematic external view of the air conditioner 1. FIG. 7 is a schematic configuration diagram of the air conditioner 1.

The air conditioner 1 is a pair type air conditioner in which one outdoor unit 11 and one indoor unit 12 are connected to each other via a liquid refrigerant pipe 17, a gas refrigerant pipe 18, and an air supply and exhaust duct 15. The air conditioner 1 includes a refrigerant circuit 10 configured by connecting the outdoor unit 11 and the indoor unit 12 via the gas refrigerant pipe 18 and the liquid refrigerant pipe 17. The air supply and exhaust duct 15 connects a humidifying unit 50 and the indoor unit 12 in the outdoor unit 11.

The air conditioner 1 can perform operations such as a cooling operation, a heating operation, a dehumidifying operation, a humidifying operation, an air-supplying operation, and an air-exhausting operation. Note that the air conditioner is not limited to the above configuration, and may be, for example, a multi-type air conditioner in which a plurality of indoor units is connected in parallel to one outdoor unit.

### (2-2) Configuration of indoor unit

The indoor unit 12 is, for example, a wall-mounted indoor unit installed on an indoor wall surface or the like. The indoor unit 12 includes an indoor unit casing 16, an indoor heat exchanger 13, an indoor fan 14, and the like. The indoor heat exchanger 13 and the indoor fan 14 are accommodated in the indoor unit casing 16.

The indoor unit casing 16 has a substantially rectangular parallelepiped shape extending in a left-right direction, and includes an air intake port 16a provided in an upper part and an air blow-out port 16b provided in a lower front part.

The indoor heat exchanger 13 includes a plurality of heat transfer tubes connected to each other and a plurality of fins inserted and fixed to the plurality of heat transfer tubes. The indoor heat exchanger 13 is an air heat exchanger that causes heat exchange between the refrigerant flowing inside and the air passing through the outside.

The indoor fan 14 is, for example, a cross-flow fan that is rotationally driven to generate an air flow in a direction intersecting an axis. The indoor fan 14 sucks indoor air into the indoor unit casing 16 and blows the air after heat exchange with the indoor heat exchanger 13 to an indoor space.

An indoor end of the air supply and exhaust duct 15 communicates with a portion downstream of the air intake port 16a and upstream of the indoor heat exchanger 13 in an air flow formed by the indoor fan 14 in the internal space of the indoor unit casing 16.

### (2-3) Configuration of outdoor unit

The outdoor unit 11 includes an outdoor air conditioning unit 20 in a lower part and the humidifying unit 50 in an upper part.

### (2-4) Configuration of outdoor air conditioning unit

The outdoor air conditioning unit 20 accommodates a compressor 21, a four-way switching valve 22 connected to a discharge side of the compressor 21, an accumulator 23 connected to a suction side of the compressor 21, an outdoor heat exchanger 24 connected to the four-way switching valve 22, an outdoor expansion valve 25 connected to the outdoor heat exchanger 24, and an outdoor fan 29 that supplies an air flow to the outdoor heat exchanger 24. The outdoor expansion valve 25 is connected to the liquid refrigerant pipe 17 via a liquid shutoff valve 27. The four-way switching valve 22 is connected to the gas refrigerant pipe 18 via a gas shutoff valve 28. The outdoor air conditioning unit 20 is connected to the indoor unit 12 via the liquid refrigerant pipe 17 and the gas refrigerant pipe 18. Specifically, the liquid refrigerant pipe 17 is connected to one end of the indoor heat exchanger 13 in the indoor unit 12. The gas refrigerant pipe 18 is connected to the other end of the indoor heat exchanger 13 in the indoor unit 12.

### (2-5) Configuration of humidifying unit

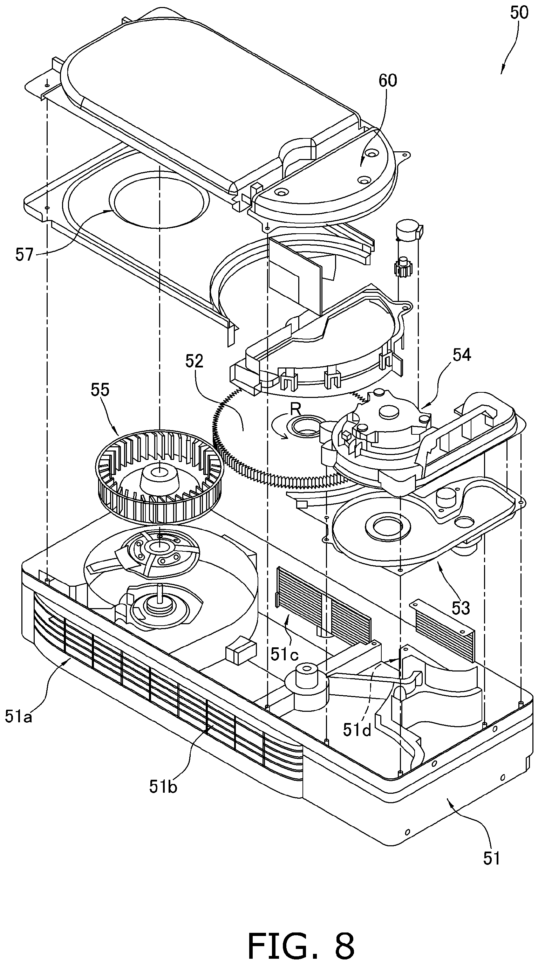

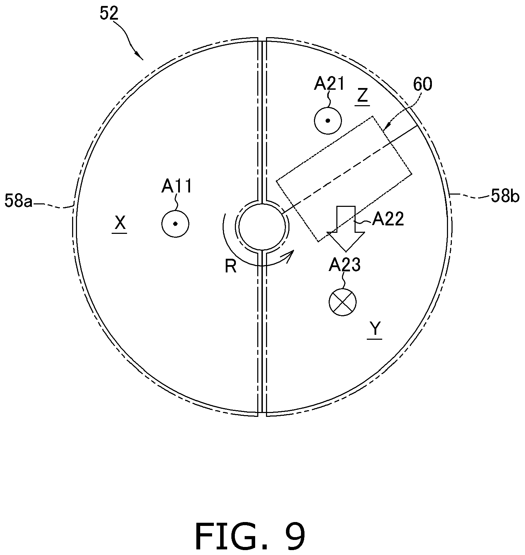

FIG. 8 is an exploded perspective view of the humidifying unit 50. FIG. 9 is an explanatory view of a region of a humidifying rotor 52 in top view.

The humidifying unit 50 includes a humidifying unit casing 51, a humidifying rotor 52, a heater 60, an adsorption fan 55, a flow path switching device 53, and an air supply and exhaust fan 54. The humidifying unit 50 can discharge air taken in from an indoor space through the air supply and exhaust duct 15 to outdoors, and can humidify outdoor air taken in from outdoors and supply the air to the indoor space through the air supply and exhaust duct 15.

### (2-5-1) Humidifying unit casing

The humidifying unit casing 51 accommodates the humidifying rotor 52, the heater 60, the air supply and exhaust fan 54, the flow path switching device 53, the adsorption fan 55, and the like.

A moisture absorption blow-out port 51a including a plurality of slit-shaped openings and a first moisture absorption intake port 51b are provided side by side on a front surface of the humidifying unit casing 51. The first moisture absorption intake port 51b is an opening through which air taken in from outdoors outside of the humidifying unit casing 51 passes in order to supply the outdoor air including moisture to the humidifying rotor 52. The moisture absorption blow-out port 51a is an opening for exhausting, to outside of the humidifying unit casing 51, air that has flowed through the moisture absorption flow path 58a and adsorbing moisture by an adsorption region X as a part of the humidifying rotor 52.

A second moisture absorption intake port 51c and an air supply and exhaust port 51d including a plurality of slit-shaped openings are provided on a back surface of the humidifying unit casing 51. Similarly to the first moisture absorption intake port 51b, the second moisture absorption intake port 51c is an opening through which air taken in from outdoors outside of the humidifying unit casing 51 passes in order to supply the outdoor air including moisture to the adsorption region X of the humidifying rotor 52. The air supply and exhaust port 51d is an opening for taking outdoor air into a humidifying flow path 58b during the humidifying operation or the air-supplying operation. The outdoor air flowing into the humidifying flow path 58b is heated by the heater 60 after passing through a cooling region Z as a part of the humidifying rotor 52. The air heated by the heater 60 passes through a heating region Y as another part of the humidifying rotor 52 and flows toward the air supply and exhaust fan 54. During the air-exhausting operation, the air taken in from the indoor unit 12 and flowing through the air supply and exhaust duct 15 flows into the humidifying flow path 58b in the humidifying unit 50 and is discharged to outdoors through the air supply and exhaust port 51d.

### (2-5-2) Humidifying rotor

The humidifying rotor 52 has a substantially columnar outer shape by winding up the adsorption sheet. The adsorption sheet is configured by overlapping a flat sheet and a corrugated sheet. A gap between the flat sheet and the corrugated sheet extends in an axial direction of the humidifying rotor 52 having a substantially cylindrical shape. Each of the flat sheet and the corrugated sheet of the adsorption sheet includes the adsorption element 30. As described above, the adsorption element 30 includes, for example, the base material layer 31 formed by integrating the metal organic framework and the fibers, and the first air-permeable layer 32 and the second air-permeable layer 33 provided so as to sandwich the base material layer 31 in the thickness direction. The humidifying rotor 52 having a substantially cylindrical shape is rotatably supported about an axis extending in an up-down direction, and is rotationally driven by a rotor driving motor. The humidifying rotor can adsorb moisture in the air in contact with the humidifying rotor 52, and can desorb the adsorbed moisture by being heated.

### (2-5-3) Adsorption fan 55

The adsorption fan 55 is rotationally driven by an adsorption fan motor, and generates an air flow passing through the adsorption region X that does not face the heater 60 in the humidifying rotor 52. Specifically, the adsorption fan 55 generates an air flow sucked from the first moisture absorption intake port 51b and the second moisture absorption intake port 51c, flowing through the moisture absorption flow path 58a, and exhausted to outdoors from the moisture absorption blow-out port 51a.

### (2-5-4) Heater

The heater 60 is located above a part of the humidifying rotor 52 located in the humidifying flow path 58b, and is disposed to face an upper surface of the humidifying rotor 52. The heater 60 heats air sent to the humidifying rotor 52 to desorb moisture from the humidifying rotor 52. The air heated by the heater 60 is sent to heat the humidifying rotor 52.

The heater 60 includes a plurality of electric heating wires as heating elements. The air passing through the heater 60 is heated by the electric heating wire.

### (2-5-5) Air supply and exhaust fan

The air supply and exhaust fan 54 is disposed next to the humidifying rotor 52, and is used by being switched between a state of generating a flow of air taken in from outdoors and sent to the indoor unit 12 and a state of generating a flow of air taken in from the indoor space into the indoor unit 12 and sent to outdoors by switching of the flow path by the flow path switching device 53. The air supply and exhaust fan 54 can be configured by, for example, a centrifugal fan such as a turbo fan.

When the air taken in from outdoors is sent to the indoor unit 12, the air supply and exhaust fan 54 causes the outdoor air to flow into the humidifying flow path 58b from the air supply and exhaust port 5 1d and pass through the humidifying rotor 52, and then generates an air flow flowing to the indoor unit 12 through the flow path switching device 53 and the air supply and exhaust duct 15 as indicated by an arrow A1. When indoor air is exhausted from the indoor unit 12 to outdoors, the air supply and exhaust fan 54 generates an air flow flowing from the indoor unit 12 to the air supply and exhaust duct 15 and from the air supply and exhaust port 51d to outdoors through the humidifying flow path 58b as indicated by an arrow A2.

### (2-5-6) Flow path switching device

The flow path switching device 53 is disposed between the air supply and exhaust fan 54 and the air supply and exhaust duct 15. The flow path switching device 53 can switch a connection state of the air supply and exhaust fan 54 and the air supply and exhaust duct 15 between a supply state in which the humidifying flow path 58b and the air supply and exhaust duct 15 are connected and a supply stop state in which the humidifying flow path 58b and the air supply and exhaust duct 15 are disconnected. The flow path switching device 53 can also switch the direction of the air flow passing through the air supply and exhaust duct 15 in the supply state.

In the supply state, an air flow from the humidifying flow path 58b to the air supply and exhaust duct 15 or an air flow from the air supply and exhaust duct 15 to the humidifying flow path 58b is allowed. Therefore, in the supply state, it is possible to switch between a state in which the air flowing through the humidifying flow path 58b and blown out from the air supply and exhaust fan 54 flows in A1 direction in the air supply and exhaust duct 15 and a state in which the air passing through the air supply and exhaust duct 15 from the indoor unit 12 in A2 direction and sucked into the air supply and exhaust fan 54 is sent to the humidifying flow path 58b. It is possible to perform the air-supplying operation of taking the outdoor air into the indoor space by flowing the air in A1 direction in a state where the rotational drive of the humidifying rotor 52 is stopped and the heater 60 is stopped. It is also possible to perform the air-exhausting operation of exhausting the indoor air to outdoors by flowing the air in A2 direction in a state where the rotational drive of the humidifying rotor 52 is stopped and the heater 60 is stopped.

In the supply stop state, the air flow from the humidifying flow path 58b to the air supply and exhaust duct 15 or the air flow from the air supply and exhaust duct 15 to the humidifying flow path 58b is blocked. Therefore, in the supply stop state, the outdoor air is not supplied into the indoor unit 12 or the air in the indoor unit 12 is not discharged to outdoors.

### (2-6) Airflow during humidifying operation

During the humidifying operation, in the humidifying unit 50, the adsorption fan 55 is driven to cause the air to flow in the direction of arrow A11-12 through the moisture absorption flow path 58a, and the air supply and exhaust fan 54 is driven to cause the air to flow in the direction of arrow A21-23 through the humidifying flow path 58b. During the humidifying operation, the humidifying rotor 52 rotates in the direction of arrow R. Specifically, in the humidifying rotor 52, by rotating in the direction of arrow R, a portion located in the adsorption region X moves to the heating region Y, a portion located in the heating region Y moves to the cooling region Z, and a portion located in the cooling region Z moves to the adsorption region X again, and this movement is repeated.

The air taken in from the first moisture absorption intake port 51b and the second moisture absorption intake port 51c and flowing in the direction of arrow A11 passes through the adsorption region X of the humidifying rotor 52 from below to above, and then flows toward near above the bell mouth 57. The moisture included in the air taken in from the first moisture absorption intake port 51b and the second moisture absorption intake port 51c as described above is adsorbed by the humidifying rotor 52 when passing through the adsorption region X of the humidifying rotor 52.

The air that has passed through the bell mouth 57 downward from near above the bell mouth 57 enters the adsorption fan 55, is blown out from the adsorption fan 55 to flow in the direction of arrow A12, and is exhausted to outdoors from the moisture absorption blow-out port 51a.

The air taken in from the air supply and exhaust port 51d and flowing in the direction of arrow A21 passes through the cooling region Z of the humidifying rotor 52 from below to above and is directed to the heater 60. In the cooling region Z of the humidifying rotor 52, the humidifying rotor 52 is cooled by being supplied with outdoor air. A part of the moisture included in the air passing through the cooling region Z of the humidifying rotor 52 can be adsorbed in the cooling region Z.

The air heated by the heater 60 passes through the heating region Y of the humidifying rotor 52 from above to below as air flowing in the direction of arrow A22-23, and is directed to the flow path switching device 53. When passing through the heating region Y of the humidifying rotor 52, the air heated by the heater 60 desorbs moisture adsorbed by the humidifying rotor 52 to become humidified air. Then, the humidified air that has reached the flow path switching device 53 is returned to the flow path switching device 53 through the air supply and exhaust fan 54, and is sent to the indoor unit 12 through the air supply and exhaust duct 15. The indoor space is thus humidified.

### (2-7) Cooling operation, dehumidifying operation, and heating operation

In the air conditioner 1 according to the present embodiment, the compressor 21 is driven in a state in which the four-way switching valve 22 is switched so that the indoor heat exchanger 13 functions as an evaporator of the refrigerant in the refrigerant circuit 10 and the outdoor heat exchanger 24 functions as a condenser of the refrigerant. Thus, the cooling operation of cooling the indoor air can be performed. During the cooling operation, the indoor fan 14 and the outdoor fan 29 are driven and controlled.

In addition, by weakening or stopping the driving of the indoor fan 14 in the same refrigerant flow as in the cooling operation to generate condensed water on a surface of the indoor heat exchanger 13, the dehumidifying operation of lowering an indoor humidity can be performed. As a result, in the air conditioner 1 according to the present embodiment, the humidifying operation and the dehumidifying operation can be performed, and the indoor humidity can be adjusted.

In addition, the compressor 21 is driven in a state in which the four-way switching valve 22 is switched so that the indoor heat exchanger 13 functions as a condenser of the refrigerant in the refrigerant circuit 10 and the outdoor heat exchanger 24 functions as an evaporator of the refrigerant. Thus, the heating operation of heating the indoor air can be performed. During the heating operation, the indoor fan 14 and the outdoor fan 29 are driven and controlled.

The cooling operation and the heating operation can be performed simultaneously with each of the humidifying operation, the air-supplying operation, and the air-exhausting operation described above. The dehumidifying operation can be performed simultaneously with each of the air-supplying operation and the air-exhausting operation described above.

### (2-8) Characteristics of air conditioner 1

The air conditioner 1 of the present embodiment can increase the humidity in the indoor space and reduce the humidity in the indoor space. Accordingly, the humidity in the indoor space can be adjusted. In particular, a degree of humidification can be adjusted by adjusting a heating degree of the heater 60 and an air blowing amount of the air supply and exhaust fan 54. Here, even in a case where the heating degree of the heater 60 is increased, the humidifying rotor 52 includes a heat-resistant material, so that deterioration of the rotor and deterioration of the moisture absorption and desorption capability are suppressed.

The air conditioner 1 can adjust not only the indoor humidity but also an indoor temperature.

In the air conditioner 1, since the organometallic framework included in the base material layer 31 of the humidifying rotor 52 is less likely to fall off from the base material layer 31, it is possible to suppress deterioration of a humidifying function due to falling of the organometallic framework. The organometallic framework fallen off from the humidifying rotor 52 is also suppressed from being sent into a room by airflow. In addition, an odor that may be generated when the organometallic framework fallen off from the humidifying rotor 52 is heated by the heater 60 is also suppressed from being sent into the room.

### (3) Atmospheric water generator

Hereinafter, as an embodiment of an atmospheric water generator using the adsorption element, an atmospheric water generator 100 will be described as an example.

### (3-1) Schematic configuration of atmospheric water generator 100

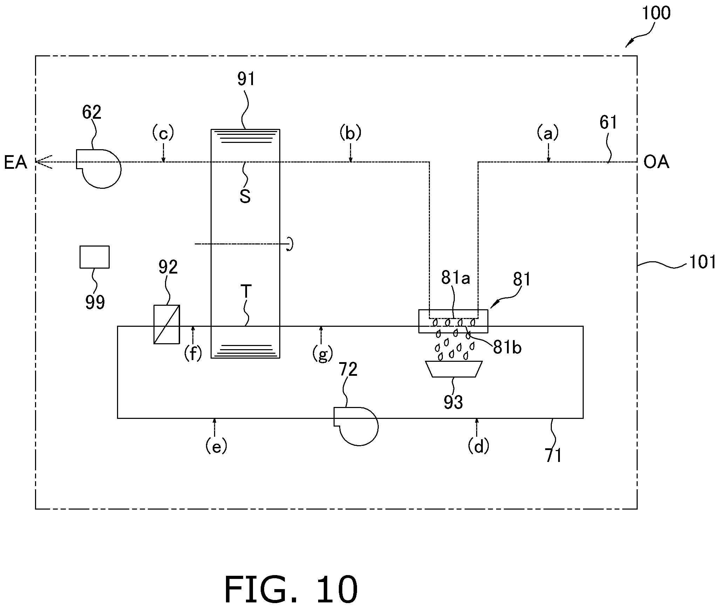

FIG. 10 shows a schematic external view of then atmospheric water generator 100.

The atmospheric water generator 100 includes a moisture absorption flow path 61, a moisture absorption fan 62, a rotor 91, a circulation circuit 71, a circulation fan 72, a heater 92, a water tank 93, a casing 101 that accommodates these components, and a controller 99.

The moisture absorption flow path 61 is an air flow path for taking in outside air (OA) to cause the rotor 91 to absorb moisture and discharging the air after being absorbed as exhaust air (EA). The moisture absorption flow path 61 includes a cooling flow path 81a of a condenser 81. The air flowing through the cooling flow path 81a exchanges heat with the air flowing through a fresh water production flow path 81b of the condenser 81 included in the circulation circuit 71 without being mixed with each other.

The moisture absorption fan 62 is a fan for generating an air flow in the moisture absorption flow path 61, and is provided on the downstream side of the air flow with respect to a moisture absorption region S of the rotor 91.

The rotor 91 adsorbs moisture contained in the air flowing through the moisture absorption flow path 61 and releases the moisture adsorbed in the air flowing through the circulation circuit 71. The rotor 91 has a substantially columnar outer shape by winding up the adsorption sheet. The adsorption sheet is configured by overlapping a flat sheet and a corrugated sheet. A gap between the flat sheet and the corrugated sheet extends in an axial direction of the rotor 91 having a substantially cylindrical shape. Each of the flat sheet and the corrugated sheet of the adsorption sheet includes the adsorption element 30. As described above, the adsorption element 30 includes, for example, the base material layer 31 formed by integrating the metal organic framework and the fibers, and the first air-permeable layer 32 and the second air-permeable layer 33 provided so as to sandwich the base material layer 31 in the thickness direction. The rotor 91 having a substantially cylindrical shape is rotatably supported about an axis extending in a passing direction of the air flow, and is rotationally driven by a rotor driving motor. The humidifying rotor can adsorb moisture in the air in contact with the rotor 91, and can desorb the adsorbed moisture by being heated. When the rotor 91 is rotationally driven, the moisture absorption region S rotationally moves in a moisture release region T, and the moisture release region T rotationally moves in the moisture absorption region S. The air flowing through the moisture absorption flow path 61 passes through the moisture absorption region S. The air flowing through the circulation circuit 71 passes through the moisture release region T.

The circulation circuit 71 is a circuit for releasing moisture from the moisture release region T of the rotor 91 and supplying air containing moisture to the condenser 81 to produce moisture. The flow of air circulating in the circulation circuit 71 is generated by driving of the circulation fan 72. The circulation circuit 71 includes the fresh water production flow path 81b of the condenser 81. The heater 92 is provided on the upstream side of the moisture release region T of the rotor 91 in the circulation circuit 71, and heats the air sent to the moisture release region T of the rotor 91. The heater 92 is provided on the upstream side of the moisture release region T of the rotor 91. The downstream side of the moisture release region T of the rotor 91 is connected to the upstream side of the fresh water production flow path 81b of the condenser 81. The circulation fan 72 is provided on the downstream of the fresh water production flow path 81b of the condenser 81. The downstream side of the circulation fan 72 is connected to the upstream side of the heater 92. An infinite number of openings (not shown) for allowing the generated condensed water to flow downward are formed at a lower end portion of the fresh water production flow path 81b of the condenser 81. The water tank

93 is provided below the fresh water production flow path 81b of the condenser 81. The condensed water flowing down through the opening at the lower end of the fresh water production flow path 81b of the condenser 81 is stored in the water tank 93.

The controller 99 is a computer including a memory such as a RAM and a ROM in which a predetermined program is stored, and a processor such as a CPU. A controller 36 executes the program to control the rotational speed of the rotor 91, the heating amount of the heater 92, the air amount of the moisture absorption fan 62, and the air amount of the circulation fan 72. Here, the controller 99 can increase the amount of moisture desorbed from the rotor 91 by controlling to increase the heating amount of the heater 92. Furthermore, the controller 99 can increase an amount of condensed water to be obtained by controlling to increase the air amount of the circulation fan 72.

### (3-2) Water production operation

In the atmospheric water generator 100, the moisture absorption fan 62 and the circulation fan 72 are driven to generate heat by the heater 92, and the rotor 91 is rotationally driven to produce water.

First, the air (a) flowing into the moisture absorption flow path 61 from an outside air inlet of the atmospheric water generator 100 is warmed by heat exchange with the air flowing through the fresh water production flow path 81b of the condenser 81 when flowing through the cooling flow path 81a of the condenser 81. The air (b) that has passed through the cooling flow path 81a of the condenser 81 is sent to the moisture absorption region S of the rotor 91, and the contained moisture is adsorbed by the rotor 91. The air (c) that has passed through the moisture absorption region S of the rotor 91 is sucked into the circulation fan 72 and blown out of the room through an outside air discharge opening of the atmospheric water generator 100.

In the circulation circuit 71, the dry air (d) is sucked into the circulation fan 72 and blown out from the circulation fan 72. The dry air (e) blown out from the circulation fan 72 is sent to the heater 92. The air (f) heated by the heater 92 is sent to the moisture release region T of the rotor 91 to release the moisture adsorbed on the rotor 91. The high-temperature and high-humidity air (g) that has passed through the moisture release region T of the rotor 91 exchanges heat with the air (a) flowing through the cooling flow path 81a of the condenser 81 in the moisture absorption flow path 61 when flowing through the fresh water production flow path 81b of the condenser 81 to be cooled to a dew point or lower, thereby generating condensed water. Condensed water generated in the fresh water production flow path 81b of the condenser 81 flows down an opening provided below the fresh water production flow path 81b, and is stored in the water tank 93. The dry air (d) that has passed through the fresh water production flow path 81b of the condenser 81 is sucked by the circulation fan 72 and circulates in the circulation circuit 71.

### (3-3) Characteristics of atmospheric water generator 100

According to the atmospheric water generator 100 of the present embodiment, water can be produced by collecting moisture contained in the air.

In the atmospheric water generator 100, the organometallic framework included in the base material layer 31 of the rotor 91 is less likely to fall off from the base material layer 31, so that a decrease in water production capacity due to the falling off of the organometallic framework is suppressed. The organometallic framework fallen off from the rotor 91 are also prevented from being mixed in the obtained condensed water by flowing through the circulation circuit 71.

### (Supplement)

Although the embodiments of the present disclosure have been described above, it will be understood that various changes in form and details can be made without departing from the gist and scope of the present disclosure described in the claims.

### REFERENCE SIGNS LIST

1: Air conditioner (humidity control apparatus)
12: Indoor unit
15: Air supply and exhaust duct (humidifier)
20: Outdoor air conditioning unit
30: Adsorption element
31: Base material layer
32: First air-permeable layer (air-permeable layer)
33: Second air-permeable layer (air-permeable layer)
50: Humidifying unit
52: Humidifying rotor
54: Air supply and exhaust fan (humidifier)
60: Heater (regenerator)
81: Condenser (condenser)
91: Rotor
92: Heater (regenerator)
100: Atmospheric water generator

### CITATION LIST

### PATENT LITERATURE

Patent Literature 1: JP H11-319461 A

## Claims

1. An adsorption element (30) comprising a base material layer (31) in which a fiber structure in which fibers are integrated and a metal organic framework including a metal ion and an organic ligand are mixed,
wherein the metal organic framework is sandwiched between the fibers and held by the fiber structure.

2. The adsorption element according to claim 1, wherein an average fiber length of the fiber is 100 µm or more.

3. The adsorption element according to claim 1 or 2, wherein the base material layer includes a binder.

4. The adsorption element according to claim 3, wherein the binder is larger than an opening diameter of the metal organic framework.

5. The adsorption element according to claim 3 or 4, wherein the binder forms a hydrogen bond or an ionic bond with the fiber.

6. The adsorption element according to any one of claims 1 to 5, further comprising an air-permeable layer (32, 33) stacked on the base material layer,
wherein
the content of the metal organic framework per unit area as viewed in the stacking direction of the air-permeable layer is smaller than that of the base material layer, or
the air-permeable layer does not have the metal organic framework.

7. The adsorption element according to claim 6, wherein the air-permeable layer includes a first air-permeable layer (32) and a second air-permeable layer (33), and the base material layer is located between the first air-permeable layer and the second air-permeable layer.

8. The adsorption element according to claim 6 or 7, wherein a thickness of the base material layer is larger than a thickness of the air-permeable layer.

9. The adsorption element according to any one of claims 1 to 8, wherein a content of the metal organic framework per unit area as viewed in a thickness direction of the base material layer is 70% by weight or more.

10. The adsorption element according to any one of claims 1 to 9, wherein the base material layer is formed in a corrugated shape.

11. A humidity control apparatus (1) comprising:
the adsorption element according to any one of claims 1 to 10; and
a regenerator (60) that desorbs moisture adsorbed by the adsorption element from the adsorption element.

12. The humidity control apparatus according to claim 11, further comprising humidifier (54, 15) that humidifies a target space using the moisture desorbed from the adsorption element.

13. An atmospheric water generator (100) comprising:
the adsorption element according to any one of claims 1 to 10;
a regenerator (92) that desorbs moisture adsorbed by the adsorption element from the adsorption element; and
a condenser (81) that condenses the moisture desorbed from the adsorption element to generate condensed water.
